# EUROPEAN PATENT APPLICATION

(11) **EP 3 064 919 A1**
(43) Date of publication of application: **07.09.2016**
(21) Application number: 16158696.1
(22) Date of filing: 04.03.2016
(51) Int. Cl.: G01L 3/10

(54) **MAGNETIC FIELD PHASE DELAY MEASUREMENT**

(30) Priority: 04.03.2015 EP 15157641
(71) Applicant: Torque and More (TAM) GmbH, 82319 Starnberg (DE)
(72) Inventor: MAY, Lutz, 82335 Berg (DE)
(74) Representative: Kopf Westenberger Wachenhausen Patentanwälte PartG mbB

(57) **Abstract**

A force measurement device (10) is provided and configured to determine a force applied to a test object, the force measurement device (10) comprising: a first magnetic field generating unit (100), configured to generate an alternating magnetic field for being applied to a test object; a first magnetic field sensing unit (200), configured to sense the generated magnetic field; a control unit (300), configured to determine a first phase of the alternating magnetic field and a second phase of the sensed magnetic field; wherein the control unit (300) is further configured to determine a phase shift between the first phase and the second phase and to utilize said phase shift for determining the force applied to the test object.

## Description

### Background of the invention

The present invention relates to a force measurement device for measuring a force applied to an object. Particularly, the invention relates to a magnetic based force measurement device for measuring a force applied to an object allowing force measuring without the need of pre-processing the object.

### Field of the Invention

Force measuring is important for many industrial applications, in particular for arrangements being dynamically impacted by a force. Applied forces may be pressuring forces, for example applied to a test object as an axial load, as well as moments like torque and bending impact. An exemplary application for torque is a shaft for a vehicle being arranged between a motor and e.g. a wheel. For determining a torque in the shaft, either a particular element needs to be mounted to the shaft, or the shaft needs to be pre-processed, e.g. magnetized. Mounting elements to a shaft may influence the movement of the shaft, pre-processing may be difficult when the shaft is not accessible or cannot me dismounted for pre-processing.

### Summary of the invention

It may be seen as an object of the present invention to provide a robust magnetic principle based mechanical force sensing technology which is less sensitive to measurement errors. Such measurement errors may particularly be caused by handling or operating errors or by external influences to the measurement signal.

This object is solved by the subject matter of the independent claim, further embodiments are incorporated in the dependent claims and in the following description.

According to a first aspect, a force measurement device is provided which is configured to determine a force applied to a test object, the force measurement device comprising: a first magnetic field generating unit, configured to generate an alternating magnetic field for being applied to a test object; a first magnetic field sensing unit, configured to sense the generated magnetic field; a control unit, configured to determine a first phase of the alternating magnetic field and a second phase of the sensed magnetic field; wherein the control unit is further configured to determine a phase shift between the first phase and the second phase and to utilize said phase shift for determining the force applied to the test object.

Thus, it is proposed to use the phase shift or phase delay of a magnetic signal which is induced to a test object in order to determine the force applied to said test object. This approach may be beneficial because at least some sources of errors may be eliminated, like for example varying distances between the force measurement device (at least one of the magnetic field generating unit and the magnetic field sensing unit) and the test object or any other influences to the strength of the generated magnetic field. Contrary to the present approach, when determining the amplitude of the sensed magnetic field in order to determine the applied force, the distance of one of the generating and sensing unit from the test object may have an impact on said amplitude and said distance must be considered in order to correctly determine the applied force. On the other hand, when referring to the phase delay as a result of the applied force, said distance between the force measurement device and the test object does not change the phase delay and therefore, the force measurement device is less sensitive to operating errors. Further, any external influences on the amplitude of the magnetic field may be eliminated and do not affect the measurement result when the phase delay is used to determine the phase delay.

According to an embodiment, the control unit is configured to determine a zero crossing of the generated magnetic field and a zero crossing of the sensed magnetic field in order to determine said first phase and second phase.

The zero crossing of the magnetic field may be defined by the state where no magnetic field is generated or sensed, i.e. there is no magnetic flux at the zero crossing. Thus, an easily identifiable point can be used to determine the phase of the generated and sensed magnetic field and the phase delay between said signals.

According to a further embodiment, the control unit is configured to determine the phase shift by using a first zero crossing of the generated magnetic field and a second zero crossing of the sensed magnetic field, which second zero crossing immediately follows the first zero crossing.

Thus, it is not necessary (or it may even not be possible) to determine a phase delay of more than one period length between the sensed magnetic field and the generated magnetic field. This embodiment provides the offset between zero crossings of the generated magnetic field and the sensed magnetic field, respectively, while only two immediately consecutive or subsequent zero crossings are considered for determining the phase shift. If, for example, there is a phase shift of 1,25 period lengths, this embodiment may particularly provided a phase shift of 0,25 period length, as only the zero crossings closest to each other are considered, while it is clear that the first zero crossing of the generated magnetic field occurs earlier in time than the first zero crossing of the sensed magnetic field.

According to a further embodiment, the control unit is configured to determine a default phase shift of the sensed magnetic field without any force being applied to the test object, wherein the control unit is configured to determine the force applied to the test object based on the phase shift between the second phase of the sensed magnetic field and the default phase shift.

There may be a standard phase shift of a generated magnetic field which is applied to a test object due to physical properties of the components of the force measurement device and/or of the test object. This standard or default phase shift typically appears without having any force applied to the test object. In order to increase the measurement accuracy of the force measurement device, it may be calibrated before using it. The subsequent measurement steps may be carried out by considering the default phase shift such that only the difference between the determined phase shift and the default phase shift is considered as being caused by the applied force and only said difference is used to determine the extent or amount of the applied force.

According to a further embodiment, the magnetic field sensing unit comprises a first sensing coil and a second sensing coil which are connected in series to each other, wherein the control unit is configured to use the summed up signal of the first and second sensing coil as the sensed magnetic field.

This approach may reduce measurement errors as two separate and locally spaced apart coils are used to sense the magnetic field. Said sensing coils are connected in series to each other such that the output signal of both coils is the sum of the individual signals of the coils.

According to a further embodiment, the magnetic field sensing unit comprises a first sensing coil and a second sensing coil, wherein the control unit is configured to use the sensed magnetic field of the first sensing coil and the sensed magnetic field of the second sensing coil in order to determine the second phase.

In this embodiment, the signal of each of the sensing coils is separately acquired and two signals are used for the further signal processing and conditioning.

It should be noted that there may exist embodiments with more than two coils which can be connected in series to each other or which can be operated separate from each other, respectively.

The sensing coils may be of identical specification relating to size, inductivity, impedance, number of windings, etc.

According to a further embodiment, the force measurement device is configured to drive the first magnetic field generating unit with an alternating current.

The first magnetic field generating unit may be a coil which generates, according to the alternating current, an alternating magnetic field, i.e. the magnetic flux alternates according to the alternating current. The alternating magnetic field is applied to the test object and is sensed by the magnetic field sensing unit(s). The phase of the sensed magnetic field is compared with the phase of the generated magnetic field or with the phase of the alternating current in order to determine the phase shift between said signals. It should be noted that the phase of the alternating current may be equivalent to the phase of the generated magnetic field.

According to a further embodiment, the alternating current is of a frequency between 3.000 Hz and 10.000 Hz.

This frequency may be advantageous for the sensing of the magnetic field and/or for the desired effect of being dependent on the applied force to a test object. The frequency may also be in a broader range between 400 Hz and 20.000 Hz.

According to a further embodiment, the alternating current is rectangle or sinus shaped.

However, the shape and the amplitude of the used alternating current signal may be of minor relevance as only the phase of said signal is used in the present case to determine the applied force.

According to a further embodiment, the force measurement device further comprises a flux concentrator having a first pole and a second pole, wherein the first pole and the second pole extend in the same direction, wherein the first magnetic field generating unit is arranged at the first pole, and wherein the first magnetic field sensing unit is arranged at the second pole.

The magnetic field generating unit and/or the magnetic field sensing unit each may comprise at least one coil which is wound around the respective pole of the flux concentrator or which is arranged such that the respective pole is coaxially surrounded by a coil.

According to a further embodiment, the flux concentrator comprises a third pole which extends in the same direction as the first pole and the second pole, wherein an imaginary line which interconnects free ends of the poles is concave shaped.

Due to the concave shape of the imaginary line which interconnects the free ends of the poles, a test object can be arranged such that an outer surface of the test object is closely surrounded by poles, particularly by the end faces of the poles, and a distance between the test object and each of the poles is minimized. Thus, the measuring accuracy may be increased and the force measurement device may require less electrical power for carrying out force measurements.

The mere fact that the envelope is concave shaped does not necessarily mean that end faces of the poles are also concave shaped. The end faces of the poles may be flat and the concave shape of the envelope is formed by different lengths of the poles.

According to a further embodiment, the imaginary line is circular.

This allows accommodating circular test objects like a shaft, wherein the poles are equidistantly located with reference to the circular test object. Particularly, this embodiment may allow contactless measuring of forces applied to a rotating shaft during operation of the test object or a machine comprising said rotating shaft.

According to a further embodiment, end faces of the first pole and second pole are concave shaped.

Thus, the end faces of the poles are formed such that they adapt to an outer form of a test object, particularly to the outer surface of a round test object such that a distance between different points at the end face of the poles and the test object is virtually the same.

The force measurement device as described herein and at least some of its properties may be described in other words as follows:
Measuring mechanical forces (like Torque, Bending, and Axial Load) using NonContact magnetic principles is described herein.

An active mechanical force sensor consists of the sensing module (which may be placed closest to the test object), and the sensor electronics. The sensing module and the sensor electronics are connected with each other by a number of wires. The sensing module consists of a magnetic field generating device and a magnetic field sensing device. The magnetic field sensing device can be an inductor (of some sort), hall-effect element, magnetoresistance element (MR), or giant magnetoresistance element (GMR), or any other device that is capable to detect and measure relative small magnetic fields (for example in the area of +/- 20 Gauss = +/- 2 mT).

The test object may preferably be a ferromagnetic object like a beam, tube, solid shaft, or plate. In a magnetic principle based, active sensor system, a known and alternating (or pulsed) magnetic field is injected into the test object at a location where the applied mechanical forces (stresses) have to be measured. The returning alternating (or pulsed) magnetic signal (coming back from the test object may change in amplitude and will be of different phase in relation to the generated magnetic field signal. The exact phase delay between the generated and the received magnetic signal is manipulated by the mechanical stresses that are applied to the test object. The mechanical stresses that can be detected and measured this way can be torque, bending, and axial load forces. The phase delay may depend on the direction of the forces.

The approach described herein uses a phase delay detection (or phase shift detection) principle in order to determine the applied forces. What mechanical forces (torque, bending, axial load) may be measured dependent on the placement of the sensing element in relation to the test object. A sensing element can be used to measure only torque forces, or only bending or axial load forces, or both in a mix.

Using a phase delay for determining the applied forces may have advantages compared to using the amplitude or signal strength. When using an analogue signal amplitude demodulation principle it may be important to maintain the correct signal ratio to assure signal linearity and accuracy. When relying on measuring the changes in the signal amplitude, the measurements may become sensitive to changes in the operating temperature, assembly tolerances, placement tolerances, and changes of the air-gap or spacing between the sensing module and the test object. Internal signal saturation (over amplification of the received signal) and signal noise (under amplification or weak signals) may also be a constant worry and have to be dealt with in the sensor electronics carefully. A phase comparison approach goes around such issues and provides additional benefits, as described herein.

The test object may preferably be a ferromagnetic shaft (like a gear box shaft or a power transmitting shaft). The sensing element may particularly be an arrangement of a magnetic field generator and magnetic field sensors. The sensing element will be placed nearest to the test object from where the mechanical force measurements will be taken from. An air gap or spacing or distance may exist between the force measurement device and the test object. Sais air gap in particularly describes the distance between the front face of the sensing element (like an end face of a pole of the flux concentrator or of the magnetic field generating and sensing units) and the outer surface of the test object.

The benefits when relying on the phase delay measurement principle may be: the measurements are less sensitive to signal noise; the signal output may be insensitive to changes of the operating temperature as the measurements are no longer relying on changes in the signal amplitude; lower complexity in the analogue portion of the sensor electronics which represents a significant cost benefit; the sensor system may become insensitive to changes in the spacing (distance) between the sensing module and the test object.

Working with a phase comparison signal processing may make the "zero" offset point of the torque (or bending) sensor system insensitive to distance (air-gap) changes. As long as a signal can be received, the "zero"-torque offset may be always correct and may also be insensitive to changes of the environmental temperature. Using a phase-shift detection approach may make the recovered signals (from the magnetic field sensors) insensitive to any type of temperature changes. Inherently the entire sensor electronics may become more stable and less noise sensitive than an analogue signal processing circuit. The main reason for this that a phase-shift (or phase-delay) signal processing circuit can operate with large amplitude (near digital) signals. Large amplitude signals are less sensitive to noise sources of any kind.

The physical size of the sensing element defines what air-gap (spacing) between the magnetic poles (at the bottom of the sensing element) and the surface of the test object are possible. Preferably, the air-gap is smaller than halve the distance between the centre of the magnetic field generator coil and the sensing coil. In this case, the sensing element may provide a sufficient signal for further processing.

Preferably, inductors are used to receive the AC magnetic signals back from the test object. However, the here described sensing principle will still be applicable when using almost any other type of magnetic field sensor, like Hall Effect, MR, or GMR.

Even though in this description one magnetic field generating coil is used and two or more magnetic field receiving devices, it may be possible to use alternative designs. The here described device will work when flipping this arrangement around: two or more magnetic field generators and one magnetic field sensor (or receiver).

The emitted AC signal that is driving the generator coil can be a rectangle or a sinus shaped signal or anything between. The here described sensing principle may work at frequencies within the range of 400 Hz to 20.000 Hz. However, a better signal performance may be achieved at a frequency range between 3.000 Hz and 10.000 Hz.

The signals from the sensing coils may be summed-up by connecting the coils to each other. However, a dual channel solution is also possible by processing the received signals from each coil individually. The benefit of a dual channel processing design is that the receiver coil specifications may be more relaxed. In such a case the electronics in each receiver channel will then be responsible to normalise the signal (amplitude, noise content) from each coil.

### Brief description of the drawings

In the following for further illustration and to provide a better understanding of the present invention exemplary embodiments are described in more detail with reference to the enclosed drawings, in which
- Fig. 1: shows a schematic illustration of a force measurement device,
- Fig. 2: shows a schematic illustration of a force measurement device,
- Fig. 3: shows a force measurement device arranged relative to a test object,
- Fig. 4: shows a force measurement device arranged relative to a test object,
- Fig. 5: shows an illustration for explaining the principle of the invention,
- Fig. 6: shows an illustration for explaining the principle of the invention,
- Fig. 7: shows an illustration for explaining the principle of the invention,
- Fig. 8: shows an illustration for explaining the principle of the invention,
- Fig. 9: shows an illustration for explaining the principle of the invention,
- Fig. 10: shows an illustration for explaining the principle of the invention,
- Fig. 11: shows an illustration for explaining the principle of the invention,
- Fig. 12: shows a schematic illustration of a control unit of a force measurement device,
- Fig. 13: shows a schematic illustration of a force measurement device,
- Fig. 14: shows a schematic illustration of a control unit of a force measurement device,
- Fig. 15: shows the phase delay between the generated magnetic field and the sensed magnetic fields when using a force measurement device,
- Fig. 16: shows a comparison of a the generated magnetic field and a sensed magnetic field where the zero crossings are at the same time,
- Fig. 17: shows a comparison of a generated magnetic field and sensed magnetic field having an offset between the zero crossings of the respective signals,
- Fig. 18: shows the arrangement of a force measurement device relative to a test object, wherein different torque force directions are indicated,
- Fig. 19: shows a schematic illustration of a control unit of a force measurement device,
- Fig. 20: shows the arrangement of a force measurement device relative to a test object, wherein different torque force directions are indicated,
- Fig. 21: shows a schematic illustration of a control unit of a force measurement device.

### Detailed description of exemplary embodiments

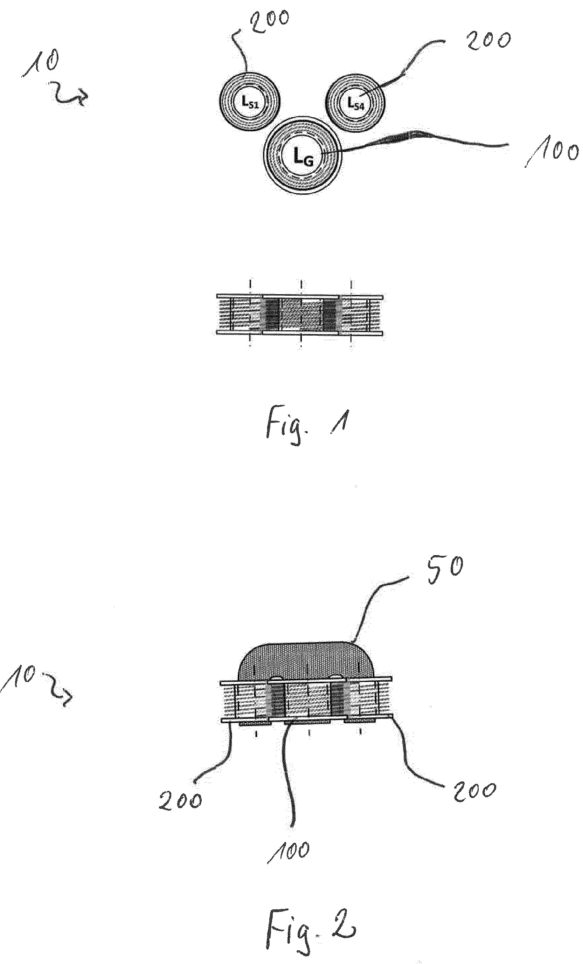

Fig. 1 shows a schematic illustration of a force measurement device 10 comprising a magnetic field generating unit 100 (labeled L_{G}) and two magnetic field sensing units 200 (labeled L_{S1} and L_{S4}) Fig. 1 shows a top view (upper picture) and a side view (lower picture).

The force measurement device 10, which may also be referred to as sensing element, is the device that will be placed nearest to the test object from where measurements will be taken. The sensing element is connected to the sensor electronics by a number of wires. In the simplest design form the sensing element consists of one magnetic field generator coil L_{G} and two magnetic field sensing (receiver) coils L_{S1} and L_{S4}. The physical orientation to each other may be of importance: there may be a rectangular triangle shape (which will be more explained later on). The three inductors (or coils) may be magnetically connected to each other by a flux concentrator.

The use of a flux concentrator may enhance the sensor system performance. The magnetic field generator is powered (driven) by an alternating current of a specifiable frequency.

The generator coil L_{G} is inducing into the test object an alternating magnetic field. The returning portions of the AC signal (in form of a changing magnetic field of the same frequency as used to drive the generator coil) will be received by the sensing coils L_{S1} and L_{S4}. The three coils may be arranged in an orthogonal shape (perpendicular to each other).

Looking from above, the two sensing coils L_{S1} and L_{S4} may be placed in relation to the generator coil L_{G} to form a rectangle (90°), which may be desirable to reduce the signal to noise ratio of the sensed magnetic field and to differentiate between the individual mechanical forces that act onto the test object, i.e. to differentiate between torque and bending forces.

Fig. 2 shows a side view of a force measurement device 10. The generating unit 100 and the sensing units 200 are located at poles of a flux concentrator 50.

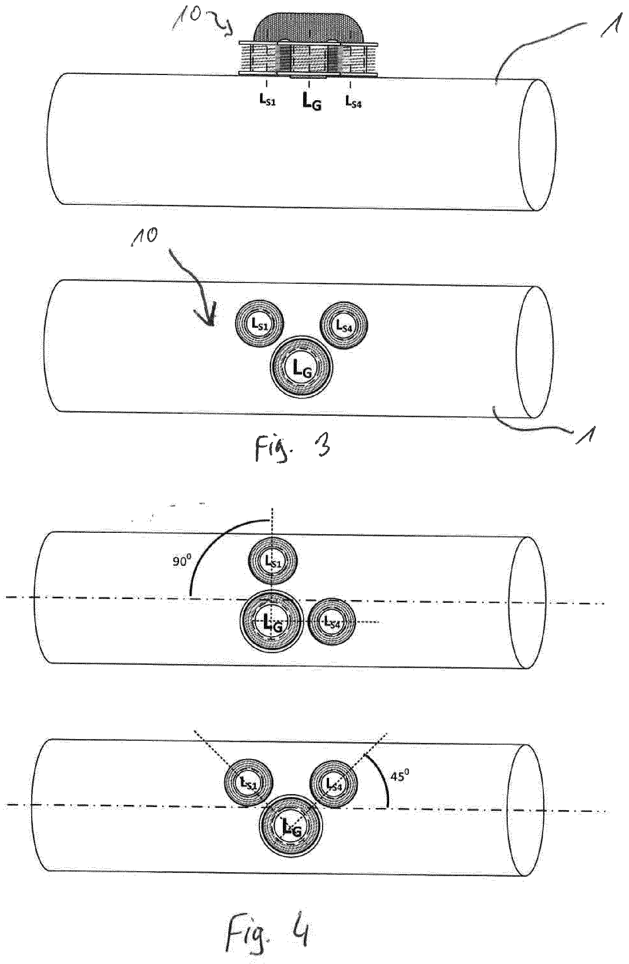

Fig. 3 shows the placement of a force measurement device 10 with relation to a test object 1. The force measurement device 10 may be placed nearest to the surface of the test object (for example a shaft), here shown from the side with the flux concentrator inserted into the coils (upper picture), and from the top-down without the flux concentrator in order to clearly point out the positioning of the generating and sensing units (lower picture).

Fig. 4 shows different arrangements of the force measurement device 10 in order to measure bending forces and axial loads (upper picture) or torque forces (lower picture).

In order to measure bending forces and axial loads, one connection line between the generating unit and one of the sensing units is perpendicular relating to the longitudinal axis of the test object and the other connection line between the generating unit and the other sensing unit is parallel (preferably having a lateral offset relating to the longitudinal axis, i.e. being located sidewards relating to the longitudinal axis) to the longitudinal axis of the test object.

In order to measure torque forces, both connection lines between the generating unit and each one of the sensing units may be inclined at an angle of 45° relating to the longitudinal axis.

In the foregoing figures, a three-pole flux concentrator is used having one generating unit and two sensing units, each being arranged at one pole of the flux concentrator, respectively. However, it should be noted that the same principle also applies to a flux concentrator having more than three poles wherein the force measurement device 10 in such a case has more than two sensing unit. For example, when using a five pole flux concentrator, a generating unit and four sensing units may be used.

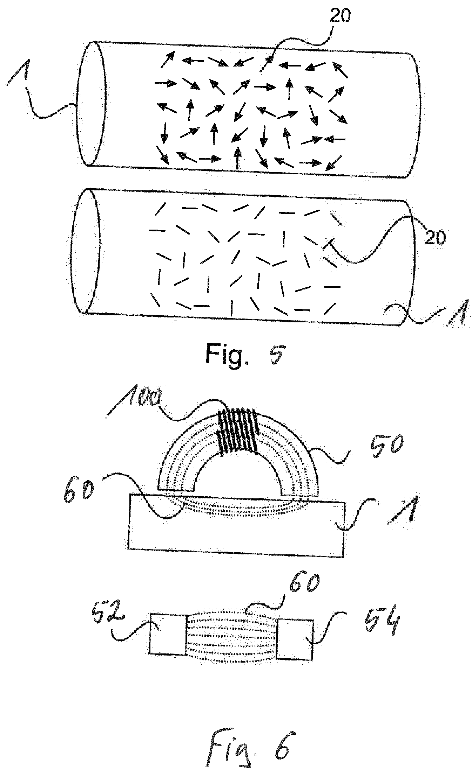

Fig. 5 shows a test object 1 with a multitude of magnetic domains for illustrating the measuring principles of the force measurement device described herein.

When applying mechanical stresses to a test object (like a power transmitting shaft), then a larger number of the magnetic domains within the test object begin to align in the direction the mechanical stresses is running through the object. This is not necessarily a re-alignment of the magnetic polarity (North / South). Mainly, this is a re-alignment of the general magnetic axis within the magnetic domain independent to its magnetic polarity (direction).

The upper picture of Fig. 5 shows the random orientation of magnetic domains in a test object, in particular within a ferromagnetic test object, which can be a gear-box shaft for example, that has been degaussed and no mechanical stresses are applied to it. The magnetic domains point randomly in any possible direction (in this 2D paper format) whereby the arrow-head represents the magnetic North-pole of the individual magnetic domains. The lower picture of Fig. 5 shows only the main magnetic direction of the individual magnetic domain and the magnetic pole direction has been removed from this picture. The general main magnetic directions shown in the upper picture and in the lower picture are identical. The only difference is that the magnetic polarity is not shown in the lower picture.

Fig. 6 illustrates the general function and principles of a magnetic force measurement device 10. The upper picture shows a side view wherein the lower picture shows a top view.

In this example, a two-pole flux concentrator 50 with an inductor coil (magnetic field generating unit) 100 wound around it is shown. The inductor is a coil that is used to generate a magnetic field inside the flux concentrator. The flux concentrator (together with the magnetic field generating coil 100) is then placed nearest the surface of the test object 1. When the inductor 100 is powered by an electric signal source (AC type of signal) then the electrically generated flux lines 60 run in a close loop within the flux concentrator 50 and the test object 1. For simplicity, the drawing shows only three of the stronger flux lines that are running in the center of the flux concentrator.

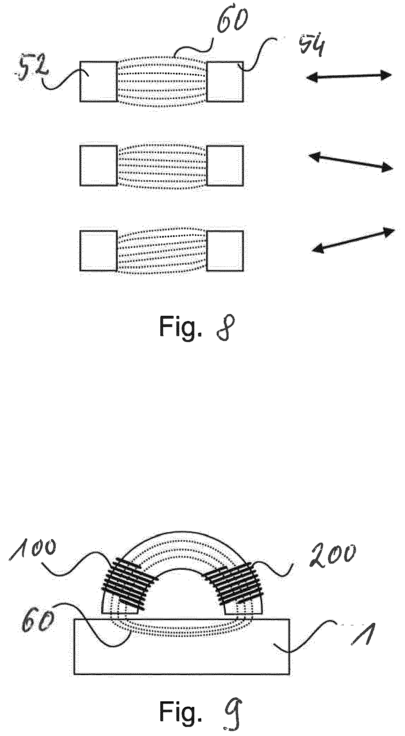

When mechanical stresses are applied to the test object then the magnetic flux lines traveling from one pole-end to the other pole-end begin to tilt by some degree, as shown in Fig 8. The stronger the applied mechanical forces are, the more tilting of the flux lines will result from it. The reason for the tilting of the sensing module flux lines has been explained before as the magnetic domains within the test object start to re-align them as shown in Fig. 5 (in relation to the applied torque or bending forces).

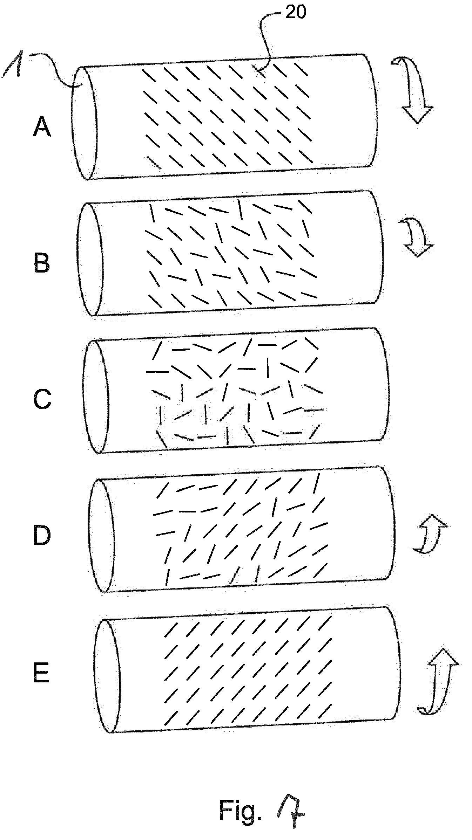

Fig. 7 illustrates the orientation of magnetic domains when applying a torque force depending on the direction and value of the applied forces.

The shown pictures A to E represent a test object, for example a ferromagnetic test object. Picture C represents a mechanical stress-free situation, while the pictures A, B, D and E represent the situations when torque forces of different strength and in different directions (positive and negative torque) are applied to the test object.

Picture C demonstrates the orientation of the general magnetic orientation of the magnetic domains that are placed at, or are beneath the surface of the test object, when no mechanical forces are applied to the ferromagnetic object and when the test object has not been magnetised in some ways before. In other words, the test object (in picture C) shows a random and polarity-free orientation of the individual magnetic domains. Without any other externally generated magnetic field applied (that could act on the test object), the test object will act magnetically neutral to the outside world.

It should be noted that on a flat piece of paper as used for illustrating the figures only a two-dimensional picture of the orientations of the magnetic domains can be shown. In reality it is a three dimensional environment.

When applying a mechanical stress to the test object (like torque forces) then the previously random oriented magnetic domains begin to fall-in-line with the direction of the mechanical stress-lines that are running through the test object (in this case, when applying torque forces: spiraling from one shaft end to the other shaft-end with a 45 degree angle with respect to the shafts main axis). The alignment of the magnetic domains to this 45 degree spiral angle is proportional to the applied torque stresses. The larger the applied torque forces are, the larger the number of aligned magnetic domains will be. The maximum number of aligned magnetic domains (as shown in the pictures A and E) has been reach near the point where plastic deformation in the test object will occur. Even when newly aligned, the re-oriented magnetic domains (triggered by the applied torque forces) will not cause that the test object becomes magnetic to the outside world. To a larger extend, the test object remains magnetically neutral (does not show a magnetic polarization of the test object to the outside world) as the combined magnetic effect of the re-aligned magnetic domains is neutralizing themselves.

Fig. 8 shows the direction of the magnetic flux lines passing through a test object to which a force is applied. The upper picture shows the case where no mechanical stresses are applied to the test object and the arrow at the right indicates the direction of the magnetic flux lines. The middle picture shows the case where negative mechanical stresses are applied to the test object and the corresponding direction of the magnetic flux lines. The lower picture shows the case of applied positive mechanical stresses and is thus the reverse situation than that shown in the middle picture.

When mechanical stresses are applied to the test object, then the flux lines created by the magnetic field generating unit will proportionally change their angular direction slightly in the way they run between the two pole-ends (here often called "magnetic field tilting"). This may be true only when the orientation of the two pole-ends of the flux concentrator and the mechanical stress lines are aligned correctly to each other. When not aligned correctly then it may be possible that the magnetic flux lines will not be affected by the applied mechanical forces or the force measurement device may not be able to detect the differences.

Fig. 9 shows a force measurement device similar to that shown in Fig. 6 with the difference that in Fig. 9 the force measurement device comprises a magnetic field sensing unit 200.

With this additional inductor, namely with the magnetic field sensing unit 200 wound around the same flux concentrator, the resulting effect of the magnetic flux-line-tilting can be detected and measured. However (in this specific example), the tilting of the flux-lines in different angular directions (positive or negative angle), will result in a phase delay of the sensed magnetic field. Depending on the direction of the applied forces, the phase shift may be positive or negative relating to the default phase shift.

Highest measurement efficiency may be achieved when the two coils are placed on separate pole-ends and nearest to the pole-end itself.

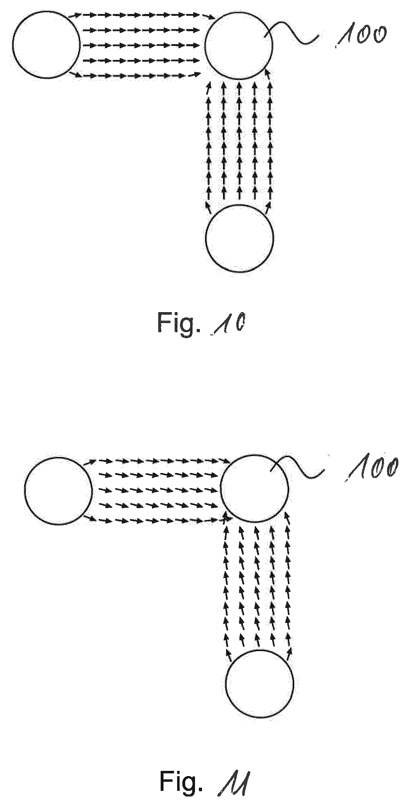

Figs. 10 and 11 show the orientation of magnetic domains that are triggered by the magnetic field generating unit.

A number of the available magnetic domains (that built the surface of the test object) will align their directions with the flux-lines that run between the pole-ends of the flux concentrator. The number of magnetic domains that take part in this re-alignment will increase when increasing the magnetic field strength, generated by the magnetic field generator coil. Fig. 10 represents the state when no mechanical forces are applied to the Test-Object (mechanical stress free ferromagnetic material) and when the magnetic field generating coil is driven by an electric current in one specific direction. The magnetic orientation of the magnetic domains will be influenced by the magnetic field generated by the magnetic field generating unit and by the mechanical stresses that are applied to the test object. Fig. 11 shows that some mechanical forces are applied to the test object, and therefore the magnetic domains are no longer pointing directly to the magnetic field generating unit. The direction of the magnetic domains may change by up to 180 degree angle when the signal polarity (electric driver current) in the magnetic field generating coil 100 is flipping over (may also depend on the alloy used to tool the test object).

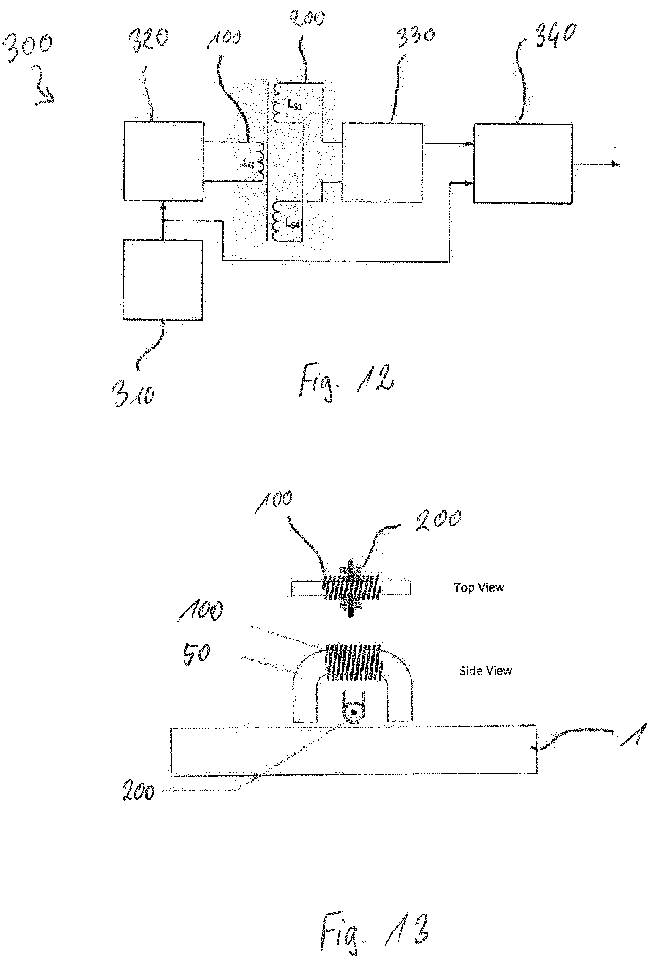

Fig. 12 schematically shows a control unit 300 of a force measurement device 10. The control unit may also be referred to as sensor electronics and signal decoding unit. The control unit 300 comprises an oscillator 310 or frequency generator 310, a power driver 320, a buffering and amplification unit 330, and a phase comparison and phase delay detector 340. The phase delay detector may also generate an output signal as a function of the detected phase delay between the generated magnetic field and the sensed magnetic field with or without consideration of the default phase delay.

The output of the circuit as shown in Fig. 12 is a value (in either analogue or digital form) that represents the amount of the detected and measured mechanical forces. A conversion factor may be used to bring the output signal into a desired format. At zero torque the output signal will be equivalent to zero degree phase shift or equivalent to the default phase shift. The output signal will report a negative angle of phase delay and positive angles of phase delays, depending on the polarity of the measured mechanical force. The angle value is equivalent to the torque force.

Fig. 13 shows an example of an active, magnetic principle based, mechanical force sensing module. Measuring the signal amplitude (at the magnetic field sensing device 200) can make the sensor signal sensitive to unwanted signal amplitude changes. Such unwanted signal amplitude changes may be caused by changes in the operating temperature (increasing and decreasing the resistivity in the magnetic field generator coil), changes in the distance or spacing between the sensing module and the test object, or other causes. Such unwanted impacts on the measured signal may be avoided by using the phase delay for measuring the applied forces.

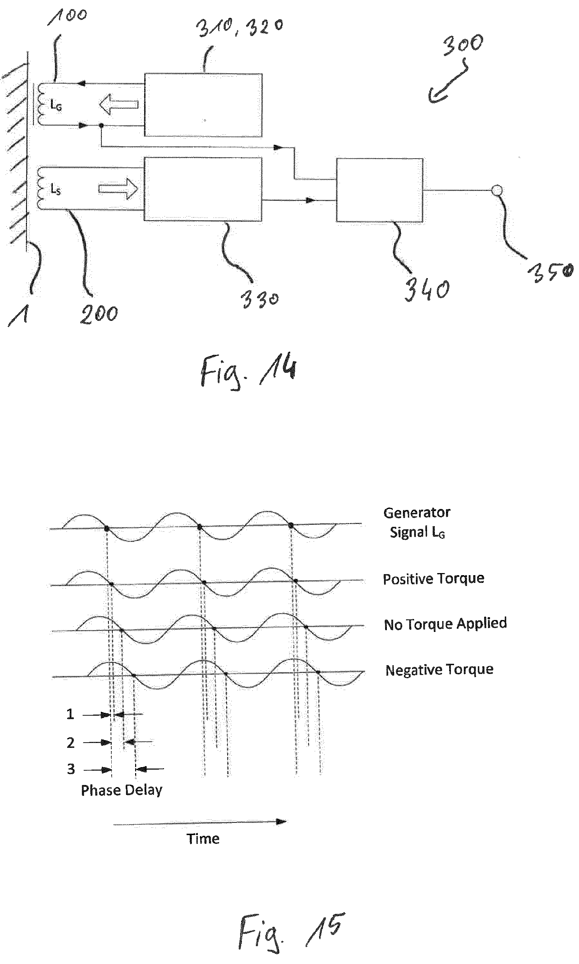

Fig. 14 shows an alternative embodiment of a control unit 300. The generating unit 100 is driven by the frequency generator 310 and the power driver 320 (these components may be integrated within one structural unit) while the sensing unit 200 is connected to the buffering and amplification unit 330 and the phase delay detector 340. The phase delay detector 340 may be connected to the generating unit in order to determine the phase of the alternating current provided by the frequency generator 310 as to be able to compare this phase with the phase of the sensed magnetic field. The phase delay detector 340 provides an output signal 350 which is indicative of the applied force.

Fig. 15 exemplarily shows the phase of the generator signal and of possible sensed magnetic field.

The upper signal curve represents the signal (electric current) of the magnetic field generator coil (L_{G}). The three curves below represent the output signal of the sensor signal conditioning circuit. The phase shifts between the three different output signals are labeled with "1", "2", and "3" and represent the changes when no mechanical stress (example: no torque, phase delay indicated with "2", wherein the default phase shift is applicable), and positive or negative stress (example: positive or negative torque) are applied to the test object. The relationship between signal phase delay and applied mechanical forces may be linear.

The phase delay when applying positive torque (clockwise) may be less than the default phase shift, while the phase delay when applying negative torque (counterclockwise) may be greater than the default phase shift.

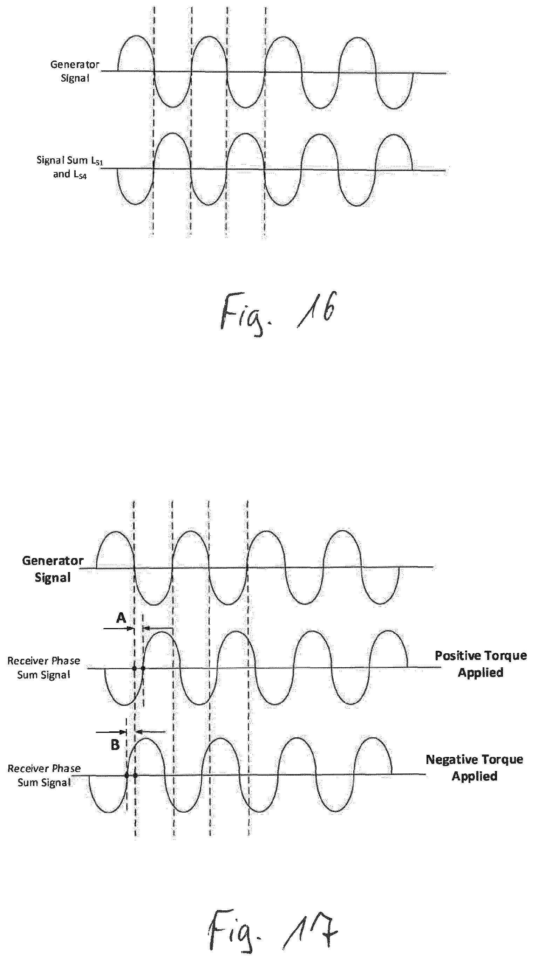

Fig. 16 schematically shows the generator signal (upper curve) and the sensed signal (lower curve) of the sensing unit(s). The sensed signal may be the sum of the signals of more than one sensing coils. The sensed signal may be phase inverted (phase shift of 180°, for example) compared to the generator signal. This inversion may be caused by the way the sensing coils or magnetic field receivers are connected to each other. However, for determining the delay between the generator signal and the sensing signal, zero positions of said signals are considered and the immediately subsequent zero position of the sensed signal is compared with the respective antecedent zero position of the generator signal, as shown in Fig. 17.

It should be noted that the sensed signal in Fig. 16 may be normalized, i.e. presented without consideration of the default phase shift. The normalized sensed signal may be determined by first determining the default phase shift and subsequently subtracting said default phase shift from the sensed signal. Thus, the zero positions correspond to each other and are aligned in time.

Fig. 17 schematically shows the phase shift of the sensed signals relative to the generator signal. When applying torque forces to the test object then the signal phase of the receiver-phase-sum-signal seems to shift back and forth in comparison to the generator signal. It should be noted that the graphs representing the received signal in Fig. 17 are normalized as explained with reference to Fig. 16. Thus, it appears that the received signal in case "B" (negative torque) is received before it is generated. However, this is not the case. When adding the default phase shift to the signal "B" of Fig. 17, then the zero crossing of the sensed magnetic field is after the zero crossing of the generated magnetic field.

The control unit (or: signal conditioning circuit) may include the functions buffering, filtering, and amplification in order to amplify the sensed signal and to reduce the signal to noise ratio or in general to reduce the noise in the sensed signal.

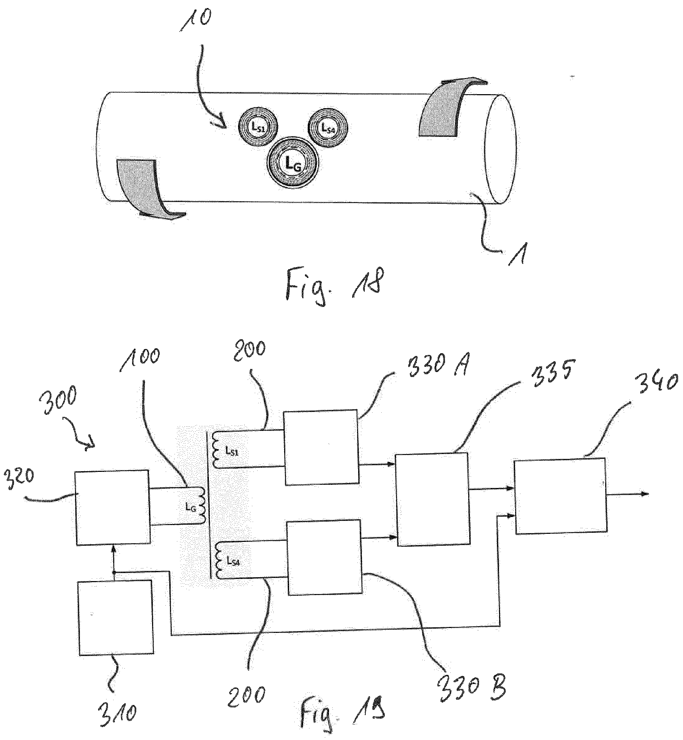

Fig. 18 shows the positioning of a force measurement device 10 in relation to a test object 1 as well as the different ways of applying a torque force to the test object.

When applying positive torque forces (right upper arrow) to the test object the signal path L_{G} to L_{S4} will be dominant. As a result, the receiver-phase-sum-signal will show a phase shift (in relation to the generator signal that will be emitted by the magnetic field generator coil L_{G}) as shown in the Fig. 17 and marked with "A". When applying negative torque (left arrow) then the situation is reversed and the receiver-phase-sum-signal will be equivalent to the situation marked with "B" in Fig. 17.

Fig. 19 shows a control unit 300 similar to that one shown in Fig. 12. Contrary to the embodiment shown in Fig. 12, the control unit 300 in Fig. 19 comprises two channels at the sensing site. Each channel comprises one coil 200 and one buffering, filtering, amplifying and normalizing unit 330A, 330B. Thus, two individual sensing signals are determined and subsequently added by an adder 335. The added signal is further processed by providing it to the phase comparison and detector 340.

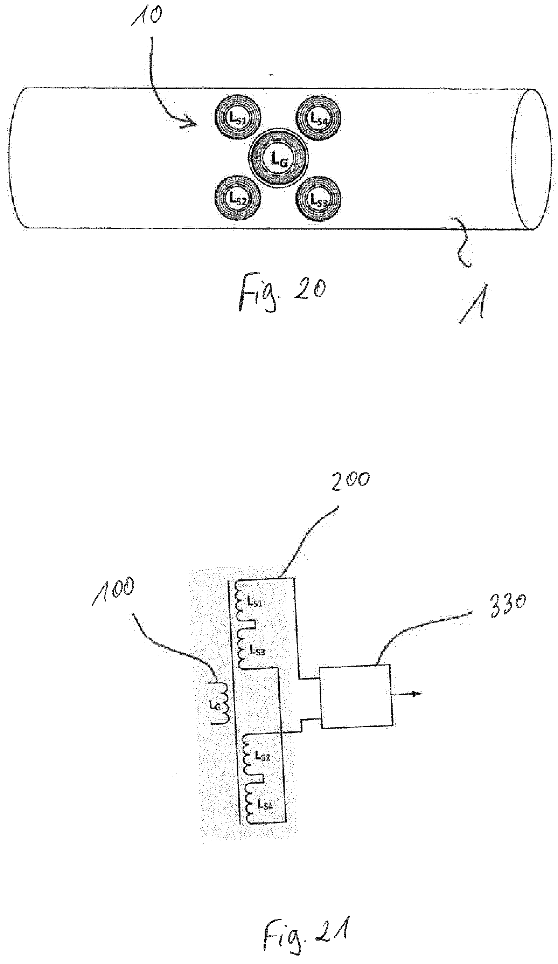

Fig. 20 shows a force measurement device 10 having one generating unit and four sensing units. For this design, the same principles apply as described above with reference to the previous drawings and embodiments.

Fig. 21 shows the basic signal processing of the force measurement device of Fig. 20. At the sensing site, the four sensing coils are interconnected with each other such that the sensed signal is provided to the buffering and amplification unit 330. The output of the unit 330 can be provided to the phase delay detector, which is not shown in Fig. 21.

In Fig. 21, L_{S1} and L_{S3} built one signal group that will be compared to the second signal group Ls₂ and L_{S4}. As explained above, the performance of the sensing element may be enhanced when using a flux concentrator. In other words, the flux concentrator may increase the efficiency of the magnetic signal path between the different coils and the test object. By doing so, the sensitivity for torque measurements may increase substantially.

### List of reference signs

- 1: test object
- 10: force measurement device
- 20: magnetic domains
- 50: flux concentrator
- 52: first pole
- 54: second pole
- 60: magnetic flux lines
- 100: magnetic field generating unit
- 200: magnetic field sensing unit
- 300: control unit
- 310: oscillator, frequency generator
- 320: power driver
- 330: buffering and amplification
- 335: adder
- 340: phase comparison, phase delay detector
- 350: output signal

## Claims

1. Force measurement device (10), configured to determine a force applied to a test object, the force measurement device (10) comprising:
a first magnetic field generating unit (100), configured to generate an alternating magnetic field for being applied to a test object;
a first magnetic field sensing unit (200), configured to sense the generated magnetic field;
a control unit (300), configured to determine a first phase of the alternating magnetic field and a second phase of the sensed magnetic field;
wherein the control unit (300) is further configured to determine a phase shift between the first phase and the second phase and to utilize said phase shift for determining the force applied to the test object.

2. Force measurement device (10) of any one of the preceding claims,
wherein the control unit (300) is configured to determine a zero crossing of the generated magnetic field and a zero crossing of the sensed magnetic field in order to determine said first phase and second phase.

3. Force measurement device (10) of claim 2,
wherein the control unit is configured to determine the phase shift by using a first zero crossing of the generated magnetic field and a second zero crossing of the sensed magnetic field, which second zero crossing immediately follows the first zero crossing.

4. Force measurement device (10) of any one of the preceding claims,
wherein the control unit (300) is configured to determine a default phase shift of the sensed magnetic field without any force being applied to the test object;
wherein the control unit is configured to determine the force applied to the test object based on the phase shift between the second phase of the sensed magnetic field and the default phase shift.

5. Force measurement device (10) of any one of the preceding claims,
wherein the magnetic field sensing unit (200) comprises a first sensing coil and a second sensing coil which are connected in series to each other;
wherein the control unit is configured to use the summed up signal of the first and second sensing coil as the sensed magnetic field.

6. Force measurement device (10) of any one of claims 1 to 4,
wherein the magnetic field sensing unit (200) comprises a first sensing coil and a second sensing coil;
wherein the control unit is configured to use the sensed magnetic field of the first sensing coil and the sensed magnetic field of the second sensing coil in order to determine the second phase.

7. Force measurement device (10) of any one of the preceding claims,
wherein the force measurement device is configured to drive the first magnetic field generating unit (100) with an alternating current.

8. Force measurement device (10) of claim 7,
wherein the alternating current is of a frequency between 3.000 Hz and 10.000 Hz.

9. Force measurement device (10) of claim 7 or 8,
wherein the alternating current is rectangle or sinus shaped.

10. Force measurement device (10) of any one of the preceding claims, further comprising:
a flux concentrator (50) having a first pole (52), a second pole (54);
wherein the first pole and the second pole extend in the same direction;
wherein the first magnetic field generating unit is arranged at the first pole;
wherein the first magnetic field sensing unit is arranged at the second pole.

11. Force measurement device (10) of claim 10,
wherein the flux concentrator comprises a third pole which extends in the same direction as the first pole and the second pole;
wherein an imaginary line which interconnects free ends of the poles is concave shaped.

12. Force measurement device (10) according to claim 11,
wherein the imaginary line is circular.

13. Force measurement device (10) of any one of claims 10 to 12,
wherein end faces of the first pole and second pole are concave shaped.
